# EUROPEAN PATENT APPLICATION

(11) **EP 2 523 325 A2**
(43) Date of publication of application: **14.11.2012**
(21) Application number: 12181008.9
(22) Date of filing: 20.08.2012
(51) Int. Cl.: H02M 1/42

(54) **Single phase power factor correction circuit with controlled and non-controlled halfbridge**

(30) Priority: 29.03.2012 CN 201210092652
(71) Applicant: Delta Electronics, Inc., Taoyuan Hsien 333 (TW)
(72) Inventor: Yan, Chao, 333 Taoyuan Hsien (TW); Tian, Rui-Fei, 333 Taoyuan Hsien (TW)
(74) Representative: Becker Kurig Straus

(57) **Abstract**

The present disclosure provides a power factor correction circuit. The power factor correction circuit includes an AC power (Vac), a first bridge arm (Q1, Cq1, Q2, Cq2), a second bridge arm (D1, Cd1, D2, Cd2) and at least one auxiliary capacitor (Caux). The AC power has first and second ends. The first bridge arm includes first and second switches (Q1, Q2) connected in series with each other. A second terminal of the first switch is connected to a first terminal of the second switch, and is coupled to the first end of the AC power via a first inductor (L). The second bridge arm is connected in parallel with the first bridge arm, and includes third and fourth switches (D1, D2) connected in series with each other. A second terminal of the third switch is connected to a first terminal of the fourth switch and the second end of the AC power. The auxiliary capacitor (Caux) is connected to the third or fourth switch (D1, D2) in parallel.

## Description

### BACKGROUND

### Field of Invention

The present disclosure relates to the field of power electronic technology. More particularly, the present disclosure relates to a power factor correction circuit (PFC) capable of reducing common-mode noise and EMI intensity.

### Description of Related Art

The semiconductor and magnetic component of a switching power supply operate at a high-frequency switching state, so that very high di/dt and dv/dt are caused and thus significant harmonic voltage and harmonic current are generated. Such harmonic voltage and harmonic current are outputted via a power input line or output line of the switching power supply, which causes pollution of the electric grid or interferes with the normal operation of powered devices. Furthermore, the harmonic voltage and harmonic current may also interfere with other devices via space radiation, thereby influencing the normal operation of the devices. More alarmingly, the harmonic voltage and harmonic current cause electromagnetic interference in the switching power supply, so that the components in the switching power supply cannot operate stably, ultimately resulting in the performance and reliability of the switching power supply being reduced.

Taking a boost PFC (power factor correction circuit) converter as an example, when the converter operates in a light load, the current of a boost inductor is small and discontinuous. When the AC input voltage changes from the positive half cycle into the negative half cycle (or from the negative half cycle into the positive half cycle), the corresponding diode (such as the body-diode of a metal-oxide-semiconductor field-effect transistor, MOSFET) cannot be turned on immediately, and the parasitic capacitance of the diode participates in the resonance, which causes high-frequency oscillation. Thus high-frequency jumping voltage and significant common mode noise are caused, which reduces the reliability of the PFC converter.

In order to effectively solve the above disadvantages, those of ordinary skill in the related art are working to find solutions. However, an appropriate solution has yet to be developed. Thus, many in the industry are endeavoring to find ways in which to design a novel power factor correction circuit, so as to reduce the occurrence of high-frequency jumping voltage across the diode and reduce common mode noise.

### SUMMARY

In order to solve the disadvantages related to reducing the common mode noise of the power factor correction circuit of the prior art, the present disclosure provides a novel power factor correction circuit.

An aspect of the present disclosure provides a power factor correction circuit including:
an AC power having a first end and a second end;
a first bridge arm having a first switch and a second switch connected in series with each other, where each of the first switch and the second switch has a first terminal and a second terminal, the second terminal of the first switch is connected to the first terminal of the second switch, and is coupled to the first end of the AC power via a first inductor;
a second bridge arm connected in parallel with the first bridge arm, where the second bridge arm includes a third switch and a fourth switch connected in series with each other, each of the third switch and the fourth switch having a first terminal and a second terminal, and the second terminal of the third switch is connected to the first terminal of the fourth switch and the second end of the AC power; and
at least one auxiliary capacitor connected in parallel to the third or fourth switch of the second bridge arm.

In an embodiment, the power factor correction circuit includes a first auxiliary capacitor and a second auxiliary capacitor. The first auxiliary capacitor is connected in parallel with the third switch, and the second auxiliary capacitor is connected in parallel with the fourth switch.

In an embodiment, each of the first switch and the second switch is a MOSFET. Furthermore, each of the first switch and the second switch is a fast-recovery MOSFET.

In another embodiment, each of the first switch and the second switch is a wide bandgap semiconductor component. Furthermore, a material of the wide bandgap semiconductor component is silicon carbide or gallium nitride.

Each of the third switch and the fourth switch is a diode. Alternatively, each of the third switch and the fourth switch is a MOSFET. Furthermore, each of the third switch and the fourth switch is a slow-recovery MOSFET.

In an embodiment, the power factor correction circuit further includes a third bridge arm connected in parallel to the first bridge arm and the second bridge arm. The third bridge arm includes a fifth switch and a sixth switch connected in series with each other. Each of the fifth switch and the sixth switch has a first terminal and a second terminal. The second terminal of the fifth switch is connected with the first terminal of the sixth switch and the second terminal of the third switch. Each of the fifth switch and the sixth switch is a slow-recovery MOSFET.

In another embodiment, the power factor correction circuit further includes a fourth bridge arm connected in parallel to the first bridge arm and the second bridge arm. The fourth bridge arm includes a seventh switch and an eighth switch connected in series with each other. Each of the seventh switch and the eighth switch has a first terminal and a second terminal. The second terminal of the seventh switch is connected with the first terminal of the eighth switch and is coupled to the first end of the AC power via a second inductor. The first switch of the first bridge arm and the seventh switch of the fourth bridge arm operate in an interleaved mode. Each of the seventh switch and the eighth switch is a wide bandgap semiconductor component, and a material of the wide bandgap semiconductor component is silicon carbide or gallium nitride. Moreover, the power factor correction circuit further includes a first surge diode and a second surge diode connected in series with each other. Each of the first surge diode and the second surge diode has a cathode and an anode. The cathode of the first surge diode is connected to the first terminal of the first switch. The anode of the second surge diode is connected to the second terminal of the second switch. The anode of the first surge diode is connected with the cathode of the second surge diode and the first end of the AC power. Each of the first surge diode and the second surge diode is a slow-recovery diode.

In a further embodiment, the power factor correction circuit further includes an output capacitor and a load both connected in parallel with the second bridge arm.

In an embodiment, an output terminal of the power factor correction circuit is connected in series with a DC-DC module so as to boost or buck an DC voltage outputted by the power factor correction circuit. The DC-DC module is an LLC conversion circuit.

In an embodiment, the capacitance of the auxiliary capacitor is between 1 nF and 100 nF. In an embodiment, the capacitance of the auxiliary capacitor is 10 nF.

By applying the power factor correction circuit of the present disclosure, at least one auxiliary capacitor is connected in parallel to the upper or lower switch of the second bridge arm. The auxiliary capacitor is connected in parallel with the parasitic capacitance of the switch so as to change the parameters of the resonant network when the phase is converted and thus reduce the resonant frequency of the high frequency signal. As a result, the common mode noise in the circuit is reduced. Moreover, two surge diodes connected in series with each other are further arranged in the power factor correction circuit, so as to realize surge protection of the switch in the circuit during the occurrence of an electrical surge, such as that caused by a lightning strike or when the circuit is activated, thereby improving the reliability and stability of circuit operation.

### BRIEF DESCRIPTION OF THE DRAWINGS

After reading specific embodiments of the present disclosure with reference to the accompanying drawings, readers can understand various aspects of the present disclosure more clearly. In the drawings:
Fig. 1 illustrates a circuit diagram of a power factor correction circuit of the prior art;
Fig. 2 illustrates a voltage waveform chart when a switch of a second bridge arm is turned on and off in the power factor correction circuit of Fig. 1;
Fig. 3(a) illustrates a schematic view of EMI noise when a light load is applied to the power factor correction circuit of Fig. 1;
Fig. 3(b) illustrates a schematic view of EMI noise when a full load is applied to the power factor correction circuit of Fig. 1;
Fig. 4 illustrates a circuit diagram of a power factor correction circuit according to a specific embodiment of the present disclosure;
Fig. 5A illustrates a resonant equivalent model of the PFC circuit of Fig. 1;
Fig. 5B illustrates a resonant equivalent model of the PFC circuit of Fig. 4;
Fig. 6 illustrates a voltage waveform chart when a switch of a second bridge arm is turned on and off in the power factor correction circuit of Fig. 4;
Fig. 7(a) illustrates a schematic view of EMI noise when a light load is applied to the power factor correction circuit of Fig. 4;
Fig. 7(b) illustrates a schematic view of EMI noise when a full load is applied to the power factor correction circuit of Fig. 4;
Fig. 8 illustrates a circuit diagram of a power factor correction circuit having a synchronous rectification function according to a specific embodiment; and
Fig. 9 illustrates a circuit diagram of a interleaving power factor correction circuit according to a specific embodiment of the present disclosure.

### DETAILED DESCRIPTION

In order to make the technical contents of the present disclosure more detailed and comprehensive, various embodiments of the present disclosure are described below with reference to the accompanying drawings. Wherever possible, the same reference numbers are used in the drawings and the description to refer to the same or like parts. However, those of ordinary skill in the art should understand that the embodiments described below are not used for limiting the scope of the present disclosure. Moreover, the accompanying drawings are only used for illustration and are not drawn to scale.

In the embodiments and the claims of the present disclosure, the description relating to "coupled with" may refer to an arrangement in which a component is indirectly connected to another component through other components, and may also refer to an arrangement in which a component is directly connected to another component without using other components.

In the embodiments and the claim of the present disclosure, the articles "a," "an" and "the" refer to one or more, unless expressly specified otherwise.

As used herein, the terms "about," "approximately," "subsequently" or "near" are used to modify any quantity that may be varied by a small amount, but these variations do not change the nature of the quantity. In the embodiments errors in quantities modified by terms "about," "approximately," "subsequently" or "near" is in the range of 20%, preferably in the range of 10%, and more preferably in the range of 5%, unless expressly specified otherwise.

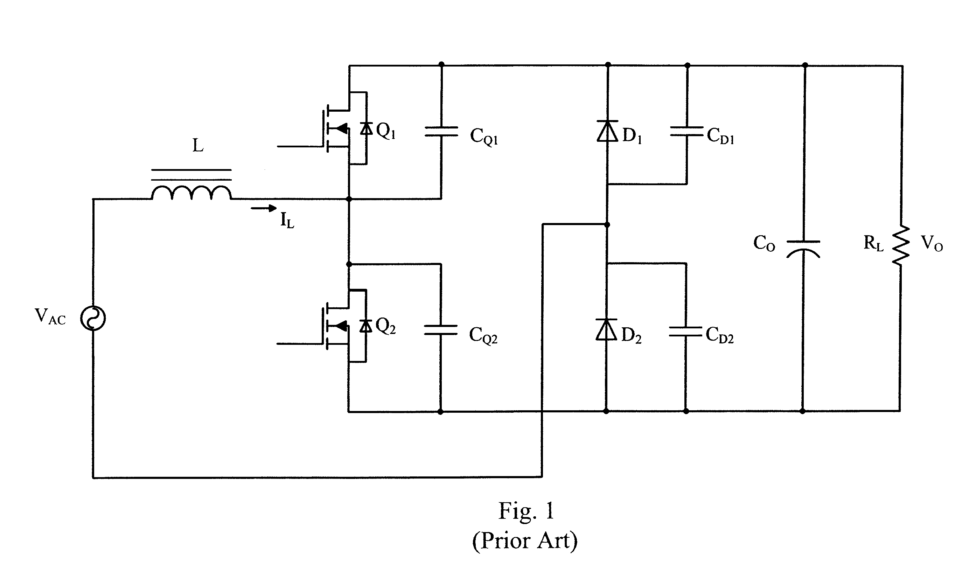

Fig. 1 illustrates a circuit diagram of a power factor correction circuit of the prior art. Referring to Fig. 1, the bridgeless PFC (power factor correction circuit) circuit includes two bridge arms. One of the two bridge arms, also referred to as a "fast bridge arm," consists of high-frequency-switching semiconductor components connected in series, such as MOSFETs, and the other one of the two bridge arms, also referred to as a "slow bridge arm," consists of semiconductor components connected in series at an operation frequency, such as slow diodes or a slow MOSFETs. Furthermore, C_{Q1} and C_{Q2} respectively represent equivalent parasitic capacitances of switches Q1 and Q2, and C_{D1} and C_{D2} respectively represent junction capacitances of diodes D1 and D2.

When an AC voltage V_{AC} is positive (i.e., the positive half cycle of the AC voltage waveform), a boost circuit is formed by an inductor L, a body-diode of the switch Q1, and the switch Q2. Similarly, when the AC voltage V_{AC} is negative (i.e., the negative half cycle of the AC voltage waveform), a boost circuit is formed by the inductor L, a body-diode of the switch Q2, and the switch Q1. It should be pointed out that in the positive half cycle of the AC voltage waveform the slow-recovery diode D2 is turned on, so as to provide a current path. Correspondingly, in the negative half cycle of the AC voltage waveform the slow-recovery diode D1 is turned on, so as to provide a current path.

However, when the bridgeless PFC circuit is in a light load state, at the time point that the AC input voltage is changed from the positive half cycle into the negative half cycle or the AC input voltage is changed from the negative half cycle into the positive half cycle, the current flowing through the boost inductor L is too small to immediately turn on the diode D1 or D2. Thus the diodes D1 and D2 in the slow bridge arm are both kept turned off. The junction capacitance C_{D1} of the diode D1 or C_{D2} of the diode D2 participates in the high-frequency resonance so as to generate a high-frequency jumping voltage, and thus serious common mode noise is caused and the EMI intensity is accordingly increased.

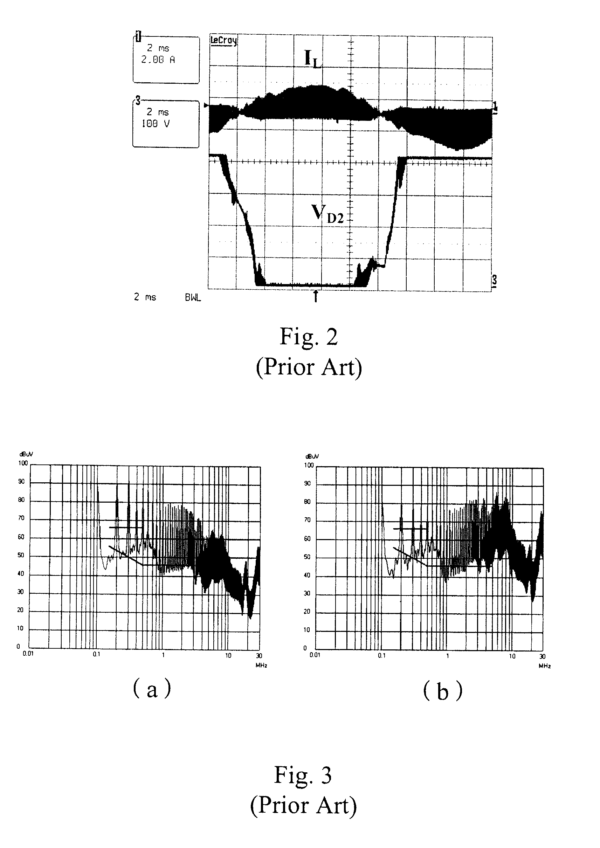

Fig. 2 illustrates a voltage waveform chart when a switch of a second bridge arm is turned on and off in the power factor correction circuit of Fig. 1. Fig. 3(a) illustrates a schematic view of EMI noise when a light load is applied to the power factor correction circuit of Fig. 1, and Fig. 3(b) illustrates a schematic view of EMI noise when a full load is applied to the power factor correction circuit of Fig. 1.

Referring to Fig. 2, predetermined testing conditions used to obtain the voltage waveform chart include a 200 VAC input voltage and a 400V/0.5A output voltage. It can be seen from the voltage waveform V_{D2} of the voltage loaded on two terminals of the diode D2 that during turning on (i.e., the falling edge of the voltage waveform) and off (i.e., the rising edge of the voltage waveform) of the diode D2, the voltage waveform thereof has a variety of high-frequency components, which cause a high-frequency jumping voltage on a DC bus regarding an input power line, thereby further causing a large amount of common mode noise.

Further referring to Figs. 3(a) and 3(b), when the PFC circuit is in light load state, the highest EMI noise is 90 dB, and when the PFC circuit is in full load state, the highest EMI noise is 80 dB. It can be seen that, for the PFC circuit of the prior art, the EMI noise in a light load state is larger than that in a full load state, which means that in a light load state, the resonant frequency of the circuit is higher, and common mode noise is larger.

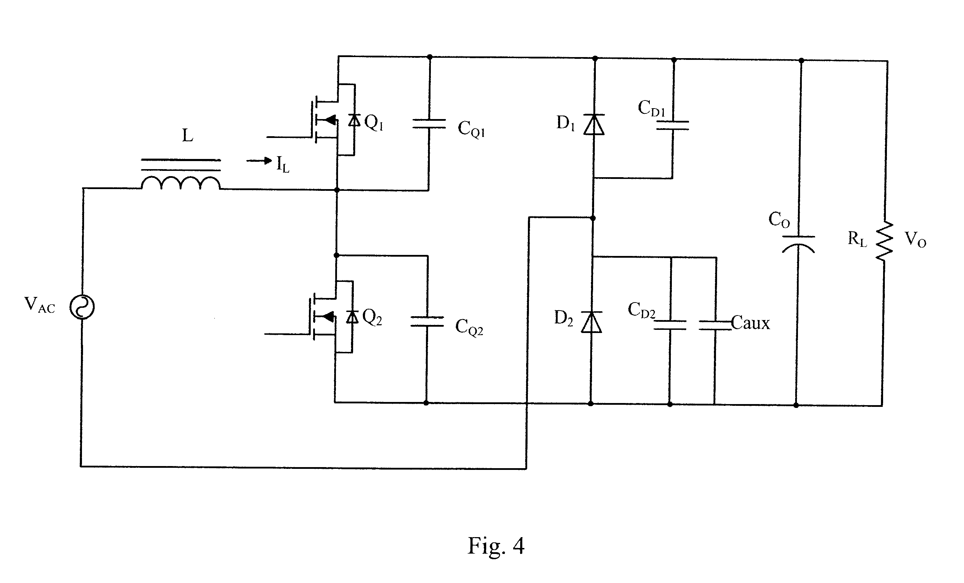

Fig. 4 illustrates a circuit diagram of a power factor correction circuit according to a specific embodiment of the present disclosure.

Referring to Fig. 4, the PFC circuit of the present disclosure includes an AC power V_{AC} having first and second ends, a first bridge arm, a second bridge arm and at least one auxiliary capacitor Cₐᵤₓ. The first bridge arm includes a first switch Q1 having first and second terminals, and a second switch Q2 having first and second terminals. The second terminal of the first switch Q1 is connected with the first terminal of the second switch Q2, and a common node of the first switch Q1 and the second switch Q2 is coupled to the first end of the AC power via an inductor L. The second bridge arm is connected in parallel with the first bridge arm. The second bridge arm includes a third switch D1 having first and second terminals, and a fourth switch D2 having first and second terminals. The third and fourth switches D1, D2 are connected in series with each other. The second terminal of the third switch D1 is connected with the first terminal of the fourth switch D2, and a common node of the third switch D1 and the fourth switch D2 is connected to the second end of the AC power.

It should be pointed out that, compared with the configuration shown in Fig. 1, the PFC circuit of the present disclosure illustrated in Fig. 4 further includes at least one auxiliary capacitor Cₐᵤₓ. The auxiliary capacitor Cₐᵤₓ is connected in parallel to the third switch D1 or fourth switch D2 of the second bridge arm. In Fig. 4, C_{Q1} and C_{Q2} respectively represent the equivalent parasitic capacitances of the switch Q1 and the switch Q2, and C_{D1} and C_{D2} respectively represent the junction capacitances of the diode D1 and the diode D2. In an embodiment, the auxiliary capacitor Cₐᵤₓ is connected in parallel to the third switch D1 of the second bridge arm and thus is connected in parallel with the junction capacitance C_{D1} of the third switch D1, so as to increase the capacitance of the resonant network and reduce the resonant frequency. In another embodiment, the auxiliary capacitor Cₐᵤₓ is connected in parallel to the fourth switch D2 of the second bridge arm and thus is connected in parallel with the junction capacitance C_{D2} of the fourth switch D2, so as to increase the capacitance of the resonant network and reduce the resonant frequency.

In a specific embodiment, the PFC circuit includes first and second auxiliary capacitors. The first auxiliary capacitor is connected in parallel with the third switch D1, and the second auxiliary capacitor is connected in parallel with the fourth switch D2. That is, each of the third switch D1 and the fourth switch D2 of the second bridge arm is connected in parallel with an auxiliary capacitor. In order to better reduce the resonant frequency and common mode noise of the circuit, the capacitance of each of the auxiliary capacitors is between 1 nF and 100 nF, so that the capacitance of each of the auxiliary capacitors is much larger than the junction capacitance of the corresponding diode. For example, the capacitance of each of the auxiliary capacitors is 10 nF.

In some embodiments, each of the first switch Q1 and the second switch Q2 is a MOSFET. Furthermore, each of the first switch Q1 and the second switch Q2 is a fast-recovery MOSFET. In some other embodiments, each of the first switch Q1 and the second switch Q2 is a wide bandgap semiconductor component. The material of the wide bandgap semiconductor component for example is silicon carbide or gallium nitride.

It should be understood that, in the PFC circuit, of the present disclosure, the semiconductor component arranged on the second bridge arm includes a diode, but the present disclosure is not limited in this regard. For example in some other embodiments each of the third and the fourth switches is a MOSFET. Furthermore, each of the third and the fourth switches is a slow-recovery MOSFET, so as to better reduce the turn-on loss of the switch of the second bridge arm and thus improve the operation efficiency of the circuit.

Furthermore, the PFC circuit further includes an output capacitor C_{O} and a load R_{L}. The output capacitor C_{O} and the load R_{L} are both connected in parallel with the second bridge arm, so as to supply power to the load R_{L} via the boost circuit formed by the first and the second bridge arms.

Furthermore, an output terminal of the PFC circuit may also be connected in series with a DC-DC module, so as to boost or buck the DC voltage outputted by the PFC circuit via the DC-DC module. The DC-DC module for example is an LLC (inductor-inductor-capacitor) conversion circuit.

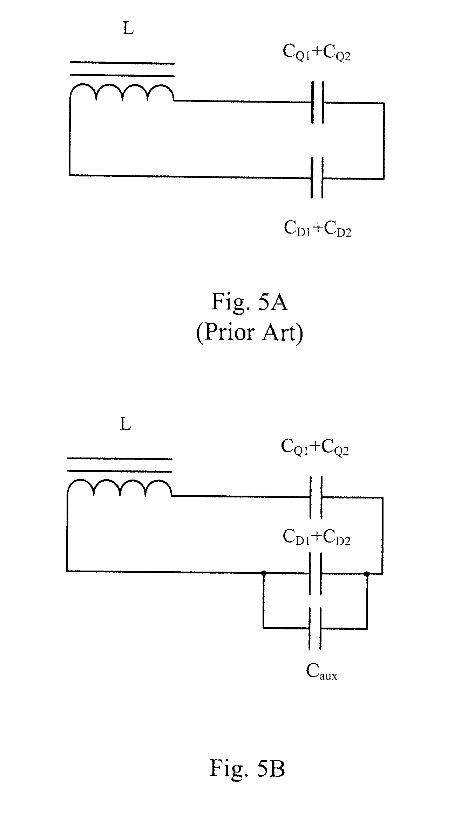

Fig. 5A illustrates a resonant equivalent model of the PFC circuit of Fig. 1, and Fig. 5B illustrates a resonant equivalent model of the PFC circuit of Fig. 4.

Referring to Fig. 5A, the capacitance of the resonant equivalent model is C_{Q1}+C_{Q2} and C_{D1}+C_{D2}. C_{Q1} and C_{Q2} are parasitic capacitances respectively of the switches Q1 and Q2 of the fast bridge arm. C_{D1} and C_{D2} are junction capacitances or parasitic capacitances respectively of the switches D1 and D2 of the slow bridge arm. When the AC voltage phase is converted, the two switches of the slow bridge arm are both turned off, so that during the high-frequency resonance, the parasitic capacitances C_{D1} and C_{D2} are connected in parallel with the resonant network. Thus resonant frequency is higher and common mode noise is larger.

Referring to Fig. 5B, the auxiliary capacitor Cₐᵤₓ is connected in parallel to the parasitic capacitance C_{D1} or C_{D2}, so that the capacitance of the resonant network is increased. It can be seen from a comparison between Figs. 5B and 5A that the larger the capacitance of the resonant equivalent model, the lower the frequency of the high-frequency resonant network and the smaller the amplitude of the V_{D2}, so that in the present disclosure the capacitance of the resonant network is increased by arrangement of the auxiliary capacitor Cₐᵤₓ, thereby reducing resonant frequency and reducing common mode noise. It should be pointed out that the capacitance of the auxiliary capacitor should be selected according to the parasitic capacitance of the diode, and should be much larger than that of the parasitic capacitance of the diode. Generally, the capacitance of the auxiliary capacitor is between 1 nF and 100 nF. Preferably, the capacitance of the auxiliary capacitor is 10 nF.

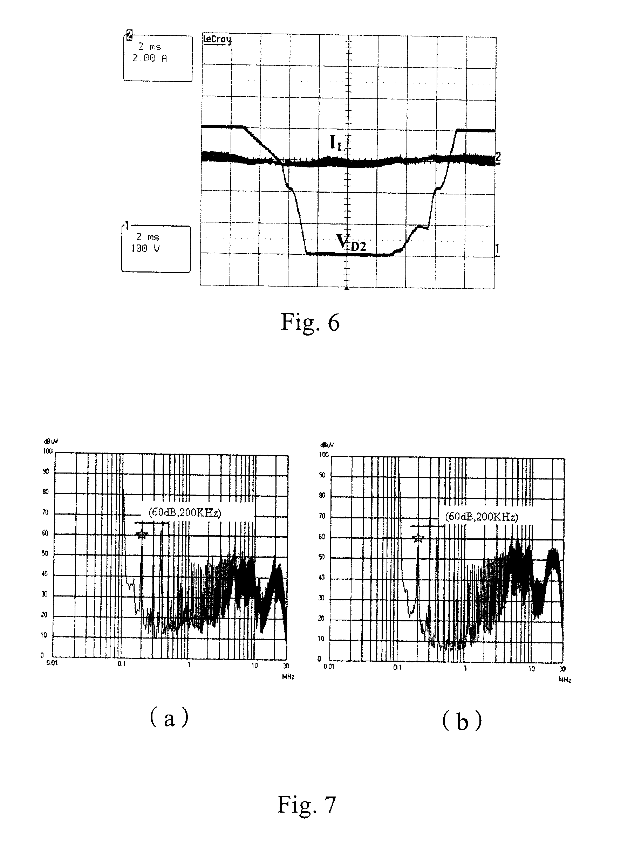

Fig. 6 illustrates a voltage waveform chart when a switch of a second bridge arm is turned on and off in the power factor correction circuit of Fig. 4. Fig. 7(a) illustrates a schematic view of EMI noise when a light load is applied to the power factor correction circuit of Fig. 4, and Fig. 7(b) illustrates a schematic view of EMI noise when a full load is applied to the power factor correction circuit of Fig. 4.

Referring to Fig.6, predetermined testing conditions used to obtain the voltage waveform chart include a 200 VAC input voltage and a 400V/0.5A output voltage. When the auxiliary capacitor Cₐᵤₓ with a capacitance of 10 nF is connected in parallel to two terminals of the switch D2 of the second bridge arm, it can be seen from the voltage waveform V_{D2} of the voltage applied to two terminals of the diode D2 that during turning on (i.e., the falling edge of the voltage waveform) and off (i.e., the rising edge of the voltage waveform) of the diode D2, the high-frequency resonant amplitude value of the voltage waveform is almost decreased to zero. That is, the auxiliary capacitor Cₐᵤₓ can eliminate high-frequency jumping voltage, so as to reduce or suppress common mode noise.

Further referring to Figs. 7(a) and 7(b), when the PFC circuit is in a light load state, the highest EMI noise is only about 60 dB, which is significantly improved compared with foregoing the situation when using the prior art power factor correction circuit, as shown in Fig. 3. Furthermore, when the PFC circuit is in a full load state, the highest EMI noise is also only about 60 dB. It can be seen that in the present disclosure, the EMI noise of the light load state of the PFC circuit and the EMI noise of the full load state of the PFC circuit are both significantly improved, and are approximately the same as each other.

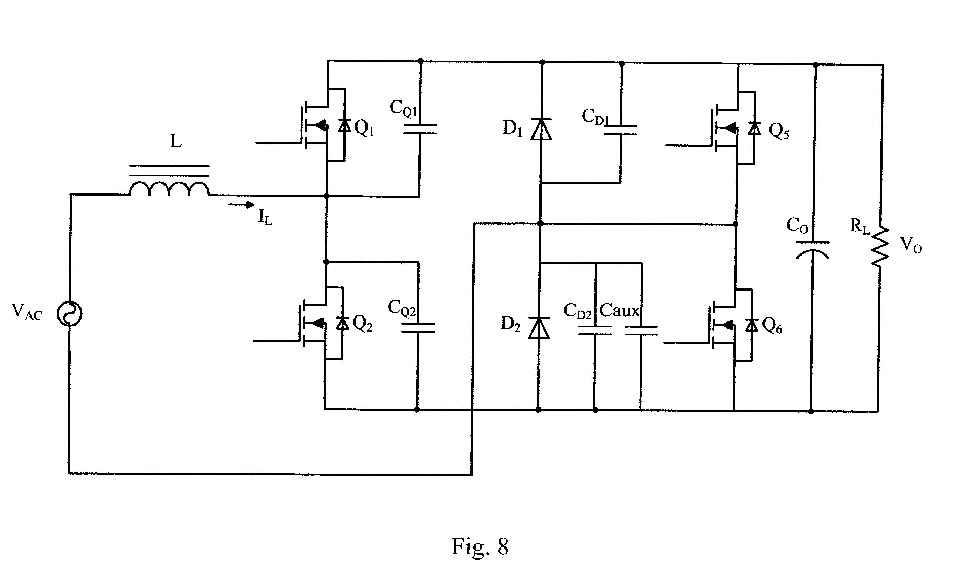

Fig. 8 illustrates a circuit diagram of a power factor correction circuit having a synchronous rectification function according to another specific embodiment of the present disclosure.

Referring to Fig. 8, in addition to the first and second bridge arms, the power factor correction circuit also includes a third bridge arm. The third bridge arm is connected in parallel with the first and second bridge arms. The third bridge arm includes switches Q5 and Q6 connected in series with each other and each having first and second terminals. The second terminal of the switch Q5 is connected with the first terminal of the switch Q6, and a common node of the switches Q5 and Q6 is electrically connected to the second terminal of the third switch D1 (or the first terminal of the fourth switch D2). In this embodiment, the PFC circuit is synchronous rectified via switches Q5 and Q6 of the third bridge arm. It should be understood that the auxiliary capacitor Cₐᵤₓ is connected in parallel to the diode D2, so as to reduce the high-frequency resonant frequency of the circuit and reduce common mode noise. Since the first and second bridge arms have been described in detail in Fig. 4, a description in this regard will not be repeated.

In a specific embodiment, each of the switches Q5 and Q6 is a MOSFET, and the MOSFET is a slow-recovery MOSFET.

In a specific embodiment, the diodes D1 and D2 of the second bridge arm may be replaced by the slow-recovery MOSFET, which can realize the synchronous rectification function of the PFC circuit.

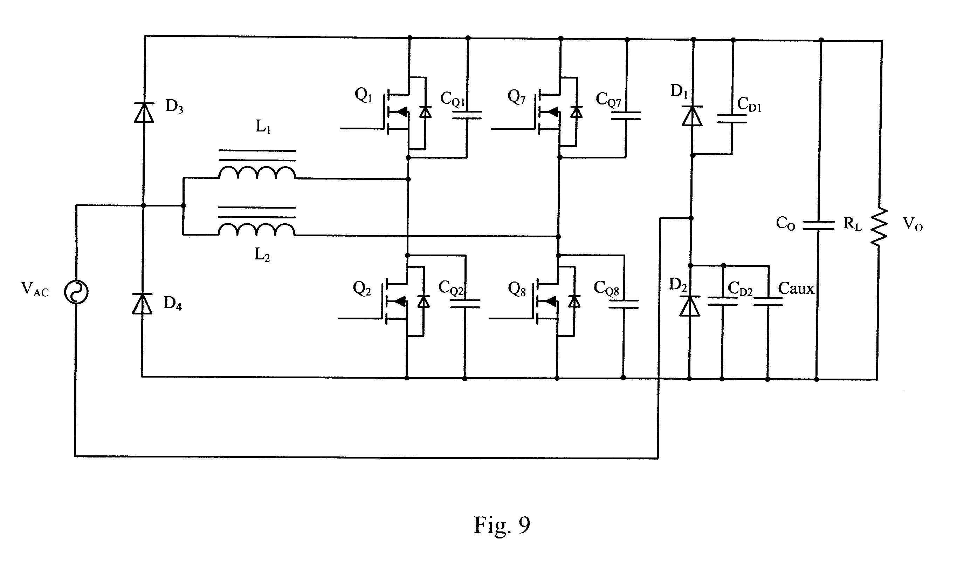

Fig. 9 illustrates a circuit diagram of a interleaving power factor correction circuit according to a further specific embodiment of the present disclosure.

Referring to Fig. 9, the PFC circuit further includes a fourth bridge arm. The fourth bridge arm is connected in parallel with the first and second bridge arms. The fourth bridge arm includes switches Q7 and Q8 connected in series with each other and each having first and second terminals. The second terminal of the switch Q7 is connected with the first terminal of the switch Q8, and a common node of the switches Q7 and Q8 is coupled to the first end of the AC power via an inductor L2. The common node of the switches Q1 and Q2 of the first bridge arm is also coupled to the first end of the AC power via the inductor L1, so that the switch Q1 of the first bridge arm and the switch Q7 of the fourth bridge arm operate in an interleaved mode. Similarly, the switch Q2 of the first bridge arm and the switch Q8 of the fourth bridge arm may also operate in an interleaved mode.

In a specific embodiment, each of the switches Q7 and Q8 is a wide bandgap semiconductor component. The material of the wide bandgap semiconductor component for example is silicon carbide or gallium nitride. In another specific embodiment, the switches Q7 and Q8 of the fourth bridge arm are similar to or exactly the same as the switches Q1 and Q2 of the first bridge arm. Each of the switches Q1, Q2, Q7 and Q8 for example is a fast-recovery MOSFET.

Furthermore, C_{Q1} and C_{Q2} respectively represent the equivalent parasitic capacitances of the switches Q1 and Q2, C_{Q7} and C_{Q8} respectively represent the equivalent parasitic capacitances of the switches Q7 and Q8, and C_{D1} and C_{D2} respectively represent the junction capacitances of the diodes D1 and D2. In Fig. 9, in the interleaving PFC circuit, the auxiliary capacitor Cₐᵤₓ of the present disclosure is connected in parallel with the diode D2, so as to reduce the high-frequency resonant frequency of the circuit and reduce common mode noise.

In a specific embodiment, the PFC circuit further includes a first surge diode D3 and a second surge diode D4 connected in series with each other. The cathode of the first surge diode D3 is connected to the first terminal of the first switch Q1. The anode of the second surge diode D4 is connected to the second terminal of the second switch Q2. The anode of the first surge diode D3 is connected with the cathode of the second surge diode D4 and the first end of the AC power. Each of the first surge diode D3 and the second surge diode D4 for example is a slow-recovery diode.

By applying the power factor correction circuit of the present disclosure, at least one auxiliary capacitor is connected in parallel to the upper or lower switch of the second bridge arm. The auxiliary capacitor is connected in parallel with the parasitic capacitance of the switch so as to change the parameters of the resonant network when the phase is changed and thus reduce the high-frequency resonant frequency and reduce the common mode noise of the circuit. Moreover, two surge diodes connected in series with each other are further arranged in the power factor correction circuit, so as to realize surge protection of the switch in the circuit during the occurrence of an electrical surge, such as that caused by a lightning strike or when the circuit is activated, thereby improving the reliability and stability of circuit operation.

It is apparent to those of skill in the art that the present disclosure is not limited to the details of the above exemplary embodiments, and the present disclosure can be realized in other specific ways without departing from the spirit or essential characteristics of the present disclosure. Thus in all respects, the embodiments should be considered as examples and are not intended to limit the present disclosure. The scope of the present disclosure shall be defined by the appended claims, rather than by the description above. Thus all changes in the meaning and scope of equivalents of the claims should be included in the present disclosure. Any appended drawing reference sign in the claims should not be considered as limited to the claims. Furthermore, the term "include" is not exclusive to other components or steps, and singular forms used for elements or steps does not exclude the possibility of multiple such elements or steps. The mentioned multiple components or devices in the claims may also be replaced by one component or device via software or hardware. The terms "first" and "second" are used to facilitate easy reference back to elements, and are not intended to represent any specific sequence.

In the foregoing, the specific embodiments of the disclosure are described with reference to the accompanying drawings. However, those of ordinary skill in the art should understand that various modifications and variations can also be made to the specific embodiments of the disclosure without departing from the spirit and scope of the disclosure. These modifications and variations all fall in the scope defined by the claims of the disclosure.

## Claims

1. A power factor correction circuit, comprising:
an AC power having a first end and a second end;
a first bridge arm comprising a first switch and a second switch connected in series with each other, each of the first switch and the second switch having a first terminal and a second terminal, wherein the second terminal of the first switch is connected to the first terminal of the second switch, and is coupled to the first end of the AC power via a first inductor;
a second bridge arm connected in parallel with the first bridge arm, wherein the second bridge arm comprises a third switch and a fourth switch connected in series with each other, each of the third switch and the fourth switch having a first terminal and a second terminal, and the second terminal of the third switch is connected to the first terminal of the fourth switch and the second end of the AC power; and
at least one auxiliary capacitor connected in parallel to the third or fourth switch of the second bridge arm.

2. The power factor correction circuit of claim 1, further comprising a first auxiliary capacitor and a second auxiliary capacitor, wherein the first auxiliary capacitor is connected in parallel to the third switch, and the second auxiliary capacitor is connected in parallel to the fourth switch.

3. The power factor correction circuit of claim 1, wherein each of the first switch and the second switch is a fast-recovery MOSFET.

4. The power factor correction circuit of claim 1, wherein each of the first switch and the second switch is a wide bandgap semiconductor component.

5. The power factor correction circuit of claim 4, wherein a material of the wide bandgap semiconductor component is silicon carbide or gallium nitride.

6. The power factor correction circuit of claim 1, wherein each of the third switch and the fourth switch is a diode.

7. The power factor correction circuit of claim 1, wherein each of the third switch and the fourth switch is a slow-recovery MOSFET.

8. The power factor correction circuit of claim 1, further comprising a third bridge arm connected in parallel to the first bridge arm and the second bridge arm, wherein the third bridge arm comprises a fifth switch and a sixth switch connected in series with each other, each of the fifth switch and the sixth switch having a first terminal and a second terminal, and the second terminal of the fifth switch is connected to the first terminal of the sixth switch and the second terminal of the third switch.

9. The power factor correction circuit of claim 1, further comprising a fourth bridge arm connected in parallel to the first bridge arm and the second bridge arm, wherein the fourth bridge arm comprises a seventh switch and an eighth switch connected in series with each other, each of the seventh switch and the eighth switch having a first terminal and a second terminal, and the second terminal of the seventh switch is connected to the first terminal of the eighth switch and is coupled to the first end of the AC power via a second inductor.

10. The power factor correction circuit of claim 9, wherein the first switch of the first bridge arm and the seventh switch of the fourth bridge arm operate in an interleaved mode.

11. The power factor correction circuit of claim 9, wherein each of the seventh switch and the eighth switch is a wide bandgap semiconductor component, and a material of the wide bandgap semiconductor component is silicon carbide or gallium nitride.

12. The power factor correction circuit of claim 9, further comprising a first surge diode and a second surge diode connected in series with each other, each of the first surge diode and the second surge diode having a cathode and an anode, wherein the cathode of the first surge diode is connected to the first terminal of the first switch, the anode of the second surge diode is connected to the second terminal of the second switch, and the anode of the first surge diode is connected to the cathode of the second surge diode and the first end of the AC power.

13. The power factor correction circuit of claim 12, wherein each of the first surge diode and the second surge diode is a slow-recovery diode.

14. The power factor correction circuit of claim 1, wherein an output terminal of the power factor correction circuit is connected in series with a DC-DC module so as to boost or buck an DC voltage outputted by the power factor correction circuit.

15. The power factor correction circuit of claim 1, wherein the capacitance of the auxiliary capacitor is between 1 nF and 100 nF.
